(19) Europäisches Patentamt
European Patent Office
Office européen des brevets

(11) EP 2 781 624 A1

(12) EUROPÄISCHE PATENTANMELDUNG

(43) Veröffentlichungstag:
24.09.2014 Patentblatt 2014/39

(51) Int Cl.:
C25B 15/00 (2006.01)  C25B 9/04 (2006.01)
C25B 9/18 (2006.01)  C25B 1/04 (2006.01)

(21) Anmeldenummer: 13181180.4

(22) Anmeldetag: 21.08.2013

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 19.03.2013 DE 102013204758

(71) Anmelder: Siemens Aktiengesellschaft
80333 München (DE)

(72) Erfinder:
• Weidauer, Jens
  90763 Fürth (DE)
• Hahn, Alexander
  91341 Röttenbach (DE)
• Herold, Jochen
  96260 Weismain (DE)

(54) **Elektrolysestack und Elektrolyseur**

(57) Die Erfindung betrifft einen Elektrolysestack (6) für einen Elektrolyseur (2) mit mehreren Elektrolysezellen (10), einen Elektrolyseur (2) sowie ein Energieversorgungssystem (1) mit einem solchen Elektrolyseur (2) und einer mit dem Elektrolyseur verbundenen, erneuerbaren Energiequelle (3).

Erfindungsgemäß ist vorgesehen, dass ein Elektrolysestack (6) eines Elektrolyseurs (2) in mehrere jeweils eine bestimmte Anzahl von Elektrolysezellen (10) umfassende, unter Verwendung von Schaltmittel (11) elektrisch kurzschließbare Segmente (13) elektrisch unterteilt ist und/oder dass durch Schaltmittel (7) ein oder mehrere Elektrolysestacks (6) von mehreren zu einem String (12) eines Elektrolyseurs (2) in Reihe geschalteten Elektrolysestacks (6) elektrisch kurzschließbar sind und/oder dass durch Schaltmittel (9) ein oder mehrere Strings (12) eines mehrere parallel geschaltete, jeweils mehrere in Reihe geschaltete Elektrolysestacks (6) aufweisende Strings (12) aufweisenden Elektrolyseurs (2) elektrisch kurzschließbar sind.

FIG 2

**Beschreibung**

Die Erfindung betrifft einen Elektrolysestack für einen Elektrolyseur mit mehreren Elektrolysezellen, einen Elektrolyseur sowie ein Energieversorgungssystem mit einem solchen Elektrolyseur und einer mit dem Elektrolyseur verbundenen, erneuerbaren Energiequelle.

Ein Elektrolyseur ist aus http://de.wikipedia.org/wiki/Elektrolyseur (erhältlich am 15.07.2013) bekannt und ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Bei einem solchen Elektrolyseur für die Wasserstoffelektrolyse, bekannt ist hier ein alkalischer Elektrolyseur oder ein saurer bzw. PEM-Elektrolyseur, wird Wasser in Wasserstoff und Sauerstoff zerlegt.

Aktuelle Überlegungen (http://de.wikipedia.org/wiki/EE-Gas, erhältlich am 15.07.2013) gehen dahin, mit überschüssiger Energie aus erneuerbaren Energiequellen, wie in Zeiten überdurchschnittlicher Solarstrom- oder Windkrafterzeugung bei entsprechenden Anlagen, Elektrolyseure zu betreiben, beispielsweise um sogenanntes EE-Gas herzustellen.

Dabei erzeugt ein an die erneuerbare Energiequelle angeschlossener (Wasserstoffelektrolyse-)Elektrolyseur mit Hilfe deren Energie zunächst Wasserstoff, welcher anschließend in einem Sabatierprozess zusammen mit Kohlendioxid zur Herstellung von Methan verwendet wird. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom (Wasserstoffelektrolyse-)Elektrolyseur erzeugte Wasserstoff auch unmittelbar weiterverwendet werden, beispielsweise für eine Brennstoffzelle.

Ein Elektrolyseur besteht üblicherweise aus mehreren elektrisch in Serie geschalteten, zu einem Elektrolysestack oder jeweils zu mehreren, in Reihe oder parallel verschalteten Elektrolysestacks zusammengefassten Elektrolysezellen. Anzahl und Art der Elektrolysezellen sowie deren Verschaltung legen dabei eine spezifische (U-I-)Kennlinie des Elektrolyseurs fest.

Eine Elektrolysezelle besteht dabei wiederum aus einer Anode und einer Kathode. Im Fall von der alkalischen Elektrolysezelle befindet sich zwischen der Anode und der Kathode ein Elektrolyt, üblicherweise Kalilauge, und ein Seperator. Im Fall von der PEM-Elektrolysezelle befindet sich zwischen der Anode und der Kathode eine gasdichte Polymer-Elektrolyt-Membran.

Der Elektrolyseur benötigt zum Betrieb eine Gleichspannung.

Bei der Energieversorgung eines Elektrolyseurs über ein Wechselspannungs- bzw. Drehstromnetz ist demnach der Einsatz eines Wandlers erforderlich. Mit Hilfe dieses Wandlers lässt sich die Gleichspannung in ihrer Höhe steuern und auf diese Weise ein Arbeitspunkt des Elektrolyseurs entsprechend seiner Kennlinie einstellen.

Bei der elektrischen Energieversorgung eines Elektrolyseurs durch eine erneuerbare Energiequelle, d.h. hier sind der Elektrolyseur und die erneuerbare Energiequelle über eine gemeinsame Gleichspannungsschiene miteinander verbunden, kann dessen Betrieb auch ohne den Einsatz eines Wandlers als Steuermittel erfolgen.

Zum Beispiel kann ein Elektrolyseur - über die gemeinsame Gleichspannungsschiene - direkt an die Gleichstromversorgung eines Photovoltaikfeldes (PV-Feld), d.h. an PV-Generatoren aus miteinander verschalteten PV-Modulen, angeschlossen werden, ohne dass eine Verbindung über einen - in diesem Fall - Photovoltaik-Wechselrichter mit einem Stromnetz vorhanden ist.

Ist ein Elektrolyseur über die gemeinsame Gleichspannungsschiene mit der erneuerbaren Energiequelle/Gleichspannungsquelle, beispielsweise dem PV-Feld (auch ein Gleichstromgenerator einer Windenergieanlage (kurz im Folgenden vereinfacht nur als Windenergieanlage bezeichnet) ist hier möglich), verbunden, so stellt sich auf der gemeinsamen Gleichspannungsschiene ein gemeinsamer Arbeitspunkt von erneuerbarer Energiequelle und Elektrolyseur ein.

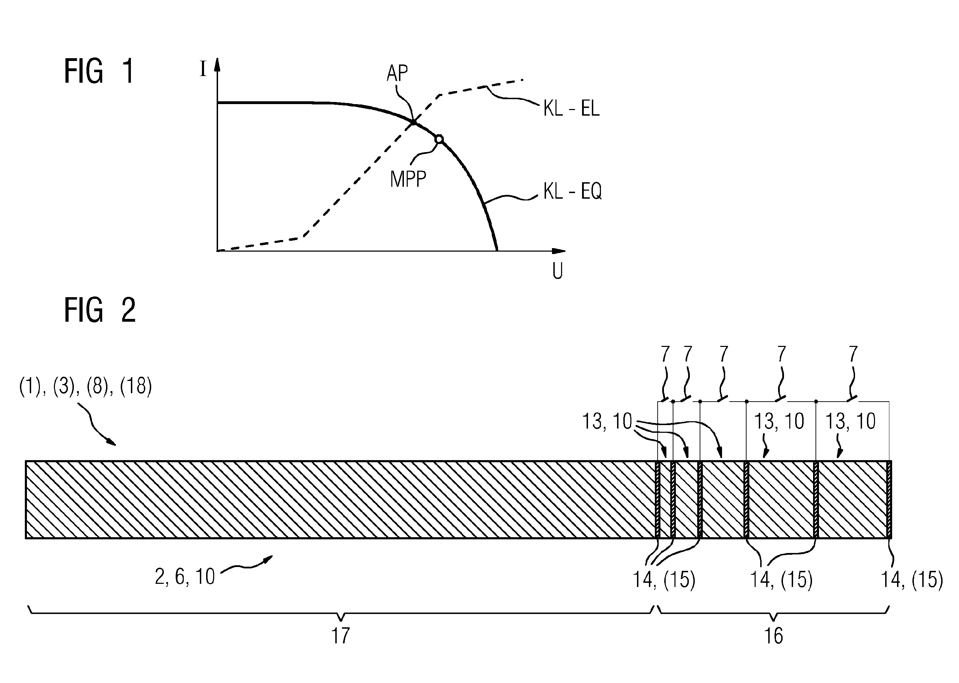

Dieser gemeinsame Arbeitspunkt von Elektrolyseur und erneuerbarer Energiequelle/PV-Feld/Windenergieanlage (beides zusammen im Folgenden auch nur als Energieversorgungssystem bezeichnet) ergibt sich, wie FIG 1 verdeutlicht, als Schnittpunkt einer - spezifischen - I-U-Kennlinie (durchgezogene Kurve; Strom I und Spannung U, im Folgenden kurz auch nur Kennlinie) der erneuerbaren Energiequelle/PV-Feld mit der I-U-Kennlinie (gestrichelte Kurve; Strom I und Spannung U) des Elektrolyseurs.

Dabei ist die Kennlinie der erneuerbaren Energiequelle, wie des PV-Feldes oder der Windenergieanlage, nicht fest, sondern wird durch (Umgebungs-)Parameter beeinflusst. So hängt beispielsweise die Kennlinie eines PV-Feldes von einer Stärke einer Sonneneinstrahlung auf das PV-Feld, einer Umgebungstemperatur bei dem PV-Feld, einer PV-Zellenfläche, mit welchen das PV-Feld betrieben wird, sowie von einer Alterung bei dem PV-Feld ab.

Entsprechende die Kennlinie beeinflussende Umgebungsparameter sind auch bei anderen erneuerbaren Energiequellen bekannt, wie beispielsweise eine Windstärke bei der Windenergieanlage.

Wie weiter FIG 1 verdeutlicht, besitzt die Kennlinie des - in diesem Fall - PV-Feldes einen Punkt, einen sogenannten MPP (maximum power point), an welchem das PV-Feld bzw. die erneuerbare Energiequelle eine maximale Leistungsausbeute liefert ("Leistungsmaximum"). Auch dieser MPP verschiebt sich mit sich ändernden Umgebungsparametern.

Es ist anzustreben, die erneuerbare Energiequelle - zur möglichst maximalen Leistungsausbeute - im Bereich seines (sich unter sich ändernden Umgebungsparameter ändernden) MPP zu betreiben. Vereinfacht ausgedrückt, Arbeitspunkt und MPP sollten nach Möglichkeit zusammenfallen.

Ist die erneuerbare Energiequelle über die Gleichspannungsschiene mit dem Elektrolyseur verbunden und stellt sich so über die Gleichspannungsschiene der gemeinsame Arbeitspunkt von erneuerbarer Energiequelle und Elektrolyseur - als gemeinsamer Schnittpunkt beider Kennlinien - ein, so ist es auch hier wünschenswert, dass der gemeinsame Arbeitspunkt im Bereich des (sich ändernden) MPP der erneuerbaren Energiequelle - und damit im Bereich des Leistungsmaximum der Energiequelle - liegt.

Eine entsprechende Abstimmung bzw. Angleichung des gemeinsamen Arbeitspunktes für einen optimalen Betrieb von erneuerbarer Energiequelle und Elektrolyseur bzw. des Energieversorgungssystems kann, wie bekannt ist, mittels eines DC-DC-Stellers erreicht werden. Allerdings ist hier von Nachteil, dass ein solcher DC-DC-Steller kostenintensiv und fehleranfällig ist bzw. sein kann.

Der Erfindung liegt daher die Aufgabe zugrunde, einen Elektrolyseur vorzuschlagen, der die Nachteile aus dem Stand der Technik überwindet. Insbesondere soll die Erfindung es bei einem Energieversorgungssystem der oben genannten Art ermöglichen, dass der Betrieb des diesbezüglichen Elektrolyseurs möglichst nahe am MPP der erneuerbaren Energiequelle erfolgt.

Die Aufgabe wird durch einen Elektrolysestack für einen Elektrolyseur mit mehreren Elektrolysezellen, einen Elektrolyseur sowie ein Energieversorgungssystem mit einem solchen Elektrolyseur und einer mit dem Elektrolyseur verbundenen, erneuerbaren Energiequelle mit den Merkmalen gemäß dem jeweiligen unabhängigen Patentanspruch gelöst.

Bei dem erfindungsgemäßen Elektrolysestack mit den mehreren Elektrolysezellen ist vorgesehen, dass dieser in mehrere jeweils eine bestimmte Anzahl von den Elektrolysezellen umfassende, unter Verwendung von Schaltmitteln elektrisch kurzschließbare Segmente elektrisch unterteilt ist ("(schaltba-rer) segmentierter Elektrolysestack").

Bei einem erfindungsgemäßen Elektrolyseur ist mindestens ein solcher Elektrolysestack - mit den kurzschließbaren Segmenten - vorgesehen ("Elektrolyseur mit (schaltbarem) segmentiertem Elektrolysestack").

Auch können bei dem Elektrolyseur mehrere solche, jeweils die kurzschließbaren Segmente aufweisenden Elektrolysestacks vorgesehen sein. Diese können dann parallel zueinander und/oder in Reihe ge-/verschaltet sein ("Elektrolyseur mit (schaltbaren) segmentierten Elektrolysestacks").

Bei einem weiteren erfindungsgemäßen Elektrolyseur ist vorgesehen, dass mehrere Elektrolysestacks zu mindestens einem String in Reihe geschaltet sind. Weiter sind hier dann Schaltmittel vorgesehen, unter Verwendung derer einer von den zu dem mindestens einen String in Reihe geschalteten Elektrolysestack oder mehrere von den zu dem mindestens einen String in Reihe geschalteten Elektrolysestacks elektrisch kurzschließbar ist bzw. sind ("Elektrolyseur mit schaltbaren Elektrolysestacks").

Bei einem weiteren erfindungsgemäßen Elektrolyseur ist vorgesehen, dass mehrere, jeweils mehrere in Reihe geschaltete Elektrolysestacks aufweisende, Strings parallel geschaltet sind. Weiter sind hier dann Schaltmittel vorgesehen, unter Verwendung derer einer von den Strings oder mehrere von den Strings (elektrisch) zu-/abschaltbar ist bzw. sind ("Elektrolyseur mit schaltbaren Strings").

"Elektrolyseur mit schaltbaren Elektrolysestacks" und "Elektrolyseur mit schaltbaren Strings" können zu einer Matrixstruktur bei einem Elektrolyseur kombiniert sein. Einzelne, mehrere oder alle Elektrolysestacks können dabei auch als "(schaltbarer) segmentierter Elektrolysestack" ausgebildet sein.

Bei dem erfindungsgemäßen Energieversorgungssystem ist vorgesehen, dass der erfindungsgemäße Elektrolyseur an eine erneuerbare Energiequelle, wie eine Photovoltaikanlage oder eine Windenergieanlage, angeschlossen ist.

Hierbei kann - zum Schutz des Energieversorgungssystems bzw. des Elektrolyseurs - der Elektrolyseur bzw. dessen Elektrolysenzellenanzahl derart abgestimmt sein, dass eine maximale Betriebsspannung der Elektrolyse größer oder gleich der maximalen Spannung der erneuerbaren Energiequelle ist.

Der Erfindung liegt die Überlegung bzw. die gemeinsame übergeordnete erfinderische Idee zugrunde, dass durch gezielte Veränderung bzw. Variation der (U-I-)Kennlinie eines Elektrolyseurs dessen Arbeits-/Betriebspunkte (gezielt) veränderbar und damit (gezielt) einstellbar sind.

Kann so die Kennlinie eines Elektrolyseurs veränderbar/variabel gestaltet bzw. eingestellt werden ("Leistungsanpassung"), so wird es dadurch, d.h. durch Änderung/Einstellung der Kennlinie des Elektrolyseurs bzw. durch dessen Leistungsanpassung, möglich, den Elektrolyseur und ein mit diesem verbundenes und diesen betreibendes System, wie insbesondere eine Gleichspannung liefernde Energiequelle, beispielsweise eine erneuerbare Energiequelle, derart optimiert aufeinander abzustimmen, dass der gemeinsame Arbeitpunkt beider Systeme im Bereich des Leistungsmaximums bzw. MPP des mit dem Elektrolyseur verbundenen und diesen betreibenden Systems liegt (Angleichung von Elektrolyseurspannung/Elektrolysestackspannung und Spannung des den Elektrolyseur betreibenden Systems bzw. "optimierter Systemabgleich" durch gemeinsamen Arbeitspunkt im Bereich des MPP des den Elektrolyseur betreibenden Systems), ohne dass eine diesbezügliche Elektronik, wie zusätzliche Wandler, Wechselrichter und/oder DC-DC-Steller, notwendig sind. Kosten und/oder Fehlerrisiken können so minimiert werden.

Diese so durch die Erfindung erreichte Flexibilität bei der Leistungsanpassung bzw. der Einstellung der Kennlinie des Elektrolyseurs und dadurch möglichen optimierten Systemabgleich des Elektrolyseurs mit einem anderen System erweist sich insbesondere dann von Vorteil, wenn der Elektrolyseur durch ein elektrische Energie lieferndes System betrieben wird, dessen Kennlinie ebenfalls - insbesondere unter sich ändernden Umgebungsparameter - variiert, wie beispielsweise bei erneuerbaren Energiequellen.

Diese erfindungsgemäße Kennlinien-Veränderung/Variation/Einstellung kann - vereinfacht und anschaulich ausgedrückt - dadurch realisiert werden, dass der Elektrolysestack eines Elektrolyseurs einzeln schaltbare Segmente aufweist, wobei durch Schaltung eines solchen Segmentes dieses elektrisch kurzschließbar bzw. elektrisch überbrückbar ist ("(schaltbarer) segmentierter Elektrolysestack").

Ändert sich - durch entsprechende Schaltung - mit dem einen bzw. mit den kurzgeschlossenen/überbrückten Segmenten des Elektrolysestacks die Anzahl der "aktiven" Elektrolysezellen im Elektrolysestack, so ändert sich dadurch auch die Kennlinie des Elektrolyseurs und so auch dessen Arbeitspunkte. Anders ausgedrückt, die Elektrolysestackspannung kann gezielt verändert werden.

Diese erfindungsgemäße Kennlinien-Veränderung/Variation/Einstellung kann - ebenfalls vereinfacht und anschaulich ausgedrückt - auch dadurch realisiert werden, dass bei einem Elektrolyseur mit mehreren zu einem String in Reihe geschalteten Elektrolysestacks ein oder mehrere dieser Elektrolysestacks elektrisch kurzschließbar bzw. überbrückbar sind ("Elektrolyseur mit schaltbaren Elektrolysestacks").

Ändert sich - durch entsprechende Schaltung - mit dem einen bzw. mit den kurzgeschlossenen/überbrückten Elektrolysestacks des Strings so auch hier die Anzahl der "aktiven" Elektrolysezellen im Elektrolyseur, so ändert sich dadurch auch dessen Kennlinie und so auch dessen Arbeitspunkte. Anders ausgedrückt, die Elektrolyseurspannung kann gezielt verändert werden.

Ferner kann diese erfindungsgemäße Kennlinien-Veränderung/ Variation/Einstellung - auch vereinfacht und anschaulich ausgedrückt - auch dadurch realisiert werden, dass bei einem Elektrolyseur mit mehreren, jeweils mehrere in Reihe geschalteten Elektrolysestacks aufweisende, parallel geschaltete Strings einer oder mehrere dieser Strings elektrisch zu-/abschaltbar sind ("Elektrolyseur mit schaltbaren Strings"/ "Zu-/Abschaltung von Strings").

Ändert sich - durch entsprechende Schaltung - mit dem einen bzw. mit den zu-/abgeschalteten Strings des Elektrolyseurs so auch hier die Anzahl der "aktiven" Elektrolysezellen im Elektrolyseur, so ändert sich dadurch auch dessen Kennlinie und so auch dessen Arbeitspunkte. Anders ausgedrückt, die Elektrolyseurspannung kann gezielt verändert werden.

Lässt sich so durch die Erfindung auf sehr einfache Weise die Kennlinie eines Elektrolyseurs flexibel ändern, so wird es hierdurch auf sehr einfache und flexible Weise möglich, einen Elektrolyseur und eine Gleichspannung liefernde Energiequelle, welche den Elektrolyseur betreibt, - durch entsprechende Schaltung der Schaltmittel bei dem Elektrolysestack/Elektrolyseur - optimiert aufeinander abzustimmen.

Hierbei kann die Erfindung auch auf komplexe und teure Leistungselektronik, wie DC-DC-Steller u.ä., verzichten, ermöglicht hierdurch einen kostengünstigen Inselbetrieb der Energiequelle, wie beispielsweise einer regenerativen Energieanlage (Photovoltaik-/Windkraftanlage), baut klein und kompakt und lässt überdies durch die Elektrolyse beim Elektrolyseur einen Energieträger, wie beispielsweise Wasserstoff, entstehen.

Bevorzugte Weiterbildungen der Erfindung ergeben sich auch aus den abhängigen Ansprüchen und/oder aus nachfolgenden Erläuterungen.

Um diese elektrische (Zu-/Ab-)Schaltung der Segmente bzw. der Elektrolysestacks bzw. der Strings zu deren Kurzschließen/ Überbrücken/Zu- bzw. Abschalten zu realisieren, können bevorzugt Schalter auf Basis eines Leistungshalbleiters, insbesondere Halbleiterschalter, z.B. als IGBT, vorgesehen sein. Anders ausgedrückt, die Schaltmittel können bevorzugt Schalter auf Basis eines Leistungshalbleiters, insbesondere Halbleiterschalter, sein. Derartige Schalter sind vielfach erprobt, standardisiert und kostengünstig.

Auch mechanische Schalter oder eine Kombination von elektrischen und mechanischen Schaltern sind vorsehbar.

Bevorzugt kann die Segmentierung bei dem Elektrolysestack durch Anbringung von Leitungsanschlüssen an Elektrodenplatten, insbesondere an - gegebenenfalls modifizierten - Bipolarplatten mit genügend hoher Querleitfähigkeit, des Elektrolysestacks erfolgen. Besonders bevorzugt, insbesondere wenn der Querleitfähigkeit der Elektrodenplatten zu gering ist, kann die Segmentierung durch Einbringung von Stromableitplatten in den Elektrolysestack erfolgen.

Weiterhin kann bevorzugt vorgesehen sein, dass das Schaltmittel bzw. der Schalter in einem thermischen Kontakt zu dem die Segmentierung bewirkenden Segmentierungsmittel, beispielsweise zu der in den Elektrolysestack eingebrachten Stromableitplatte, zu der Elektrodenplatte oder zu dem an der Elektrodenplatte angebrachten Leitungsanschluss, steht. Das Segmentiermittel kann dann so gleichzeitig als Kühlkörper für das Schaltmittel bzw. den Schalter dienen. Der so entstehende Elektrolysestack bzw. Elektrolyseur baut darüber hinaus so auch äußerst kompakt.

Auch kann vorgesehen sein, dass die Anzahl der Elektrolysezellen der Segmente jeweils unterschiedlich ist. Besonders bevorzugt kann hier weiter vorgesehen sein, dass die Anzahl der Elektrolysezellen eine mathematische Reihe bildet, beispielsweise nach folgender Formel,

$$a * (2^x)$$

(mit a = natürliche Zahl, x = Anzahl der Segmente). Hierdurch lässt sich eine Spannung des Elektrolysestacks sehr flexibel anpassen, bei gleichzeitig minimierter Anzahl von Segmenten.

Wählt man beispielsweise a = 1 und x = 5, so erhält man eine Segmentierung von Segmenten bzw. Elektrolysezellgruppen zu 2, 4, 8, 16 und 32 Elektrolysezellen. Durch Schaltung bzw. Kurzschließen/Überbrücken einzelner Segmente/Elektrolysezellgruppen können so insgesamt 32 verschiedene Spannungswerte über die Segmentierung eingestellt werden.

Auch kann vorgesehen sein, dass der Elektrolysestack einen segmentierten Bereich - mit der Segmentierung - sowie einen nicht segmentierten (statischen) Bereich aufweist.

Dabei kann bevorzugt weiter vorgesehen sein, dass der segmentierte Bereich ca. 1/4 bis 1/3 des Elektrolysestacks, insbesondere ca. 1/4 oder ca. 1/3 des Elektrolysestacks, umfasst. Entsprechend kann so auch bevorzugt vorgesehen sein, dass der nicht segmentierte/statische Bereich ca. 2/3 bis 3/4 des Elektrolysestacks, insbesondere ca. 2/3 oder ca. 3/4 des Elektrolysestacks, umfasst.

Ferner kann vorgesehen sein, dass der Elektrolysestack ca. 100 bis 400, insbesondere, wie üblich, ca. 200 bis 300, Elektrolysezellen aufweist.

Für einen - so üblichen - Elektrolysestack mit beispielsweise 250 Elektrolysezellen ergibt sich so ein segmentierter Bereich von ca. 40 bis 85 Elektrolysezellen bzw. ein statischer/nicht segmentierter Bereich von ca. 165 bis 210 Elektrolysezellen.

Für den - so üblichen - Elektrolysestack mit den beispielsweise 250 Elektrolysezellen und einer ca. 2,2 V Zellspannung ergibt sich so - bei entsprechender Bemessung des segmentierten/statischen Bereichs - ein Regelbereich von ca. 300 V bis 550 V.

Durch die "ungleichmäßige" Segmentierung (des segmentieren Bereichs des Elektrolyseurs) in Kombination mit der Unterteilung des Elektrolyseurs in den segmentierten und den nicht segmentierten Bereich lassen sich so Erfordernisse von der den Elektrolyseur betreibenden Energiequelle optimal abbilden - und es entsteht eine schrittweise Regelung des Gesamtsystems aus Elektrolyseur und Energiequelle.

Weiter kann auch ein Elektrolyseur vorgesehen sein, bei welchem mindestens ein solcher erfindungsgemäßer segmentierter Elektrolysestack, insbesondere auch mehrere, insbesondere parallel geschaltete erfindungsgemäße segmentierte Elektrolysestacks, zusammen, insbesondere in Parallelschaltung, mit nicht segmentierten Elektrolysestacks verbaut sind.

Während bei dem erfindungsgemäßen segmentierten Elektrolysestack ca. 100 bis 400, insbesondere ca. 200 bis 300, Elektrolysezellen verbaut sein können - wodurch sich (Spannungs-)Regelbereiche zwischen ca. 300 V und 550 V realisieren lassen, kann es sinnvoll sein bei einem nicht segmentierten Elektrolysestack ca. 10 bis 20 Elektrolysezellen zu verbauen. Dieser kann dann mit Spannungen zwischen 20 V und 50 V betrieben werden.

Weiter kann bei dem Elektrolyseur auch eine Erfassungseinheit zur Erfassung einer Betriebsstundenzahl von zumindest einigen der Elektrolysestacks vorgesehen sein.

Ferner kann die Erfassungseinheit auch eingerichtet sein, um leistungsbezogene Messdaten, wie eine Wirkleistung oder diesbezüglich verwandte Messdaten, zum Beispiel eine DC-Spannung und einen DC-Strom der Energiequelle oder eine Produktionsmenge Wasserstoff/Elektrolysezelle, zu erfassen.

Auch kann die Erfassungseinheit eingerichtet sein, um Umgebungsparameter, insbesondere bei der Energiequelle, wie beispielsweise eine Einstrahlung oder ein Temperatur bei einer PV-Anlage, zu erfassen.

Weiterhin kann die Erfassungseinheit eingerichtet sein, um einen aktuellen MPP aus einer Kennlinie der Energiequelle zu ermitteln.

Auch kann eine Steuereinheit zur Steuerung der Schaltmittel - und so zu Kurz-/Zu-/Abschaltung bzw. Überbrückung der Segmente/Elektrolysestacks/Strings - vorgesehen sein, wobei die Steuereinheit insbesondere derart eingerichtet sein kann, dass die Steuerung (der Schaltmittel) durch die Steuereinheit aufgrund von den leistungsbezogenen Messdaten und/oder abhängig von der erfassten Betriebsstundenzahl und/oder des ermittelten aktuellen MPP erfolgt.

Insbesondere lässt sich so - auf Basis der erfassten Betriebsstunden - eine "gleichmäßige" Kurz-/Zu-/Abschaltung bzw. Überbrückung, kurz und vereinfacht ausgedrückt eine gleichmäßige Aktivierung, über alle bzw. der Segmente/ Elektrolysestacks/Strings - und damit ein gleichmäßiger (Bauteil-)Verschleiß erreichen.

Hierdurch lässt sich eine Lebensdauer des Elektrolyseurs verlängern.

Besonders bevorzugt ist der Elektrolyseur ein alkalischer Elektrolyseur oder ein saurer bzw. PEM-Elektrolyseur. Der Elektrolyseur kann mit jeder Art von Gleichspannung liefernder Energiequelle direkt verbunden sein. Besonders bevorzugt ist die Energiequelle eine erneuerbare/regenerative Energiequelle.

Die erneuerbare Energiequelle ist besonders bevorzugt ein regenerativer Stromerzeuger, insbesondere eine Photovoltaikanlage oder eine Windkraftanlage.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden.

Die Erfindung ist jedoch nicht auf die in den Ausführungsbeispielen angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht werden.

Funktions-/bauartgleiche bzw. identische Elemente oder Komponenten weisen in den Ausführungsbeispielen gleiche Bezugszeichen auf.

Es zeigen:

FIG 1   ein I-U-Diagramm mit den Kennlinien einer Energiequelle und eines Elektrolyseurs,

FIG 2   einen Elektrolysestack eines Elektrolyseurs gemäß einem Ausführungsbeispiel,

FIG 3   ein Ersatzschaltbild mit einer erneuerbaren Energiequelle und einem direkt angeschlossenen Elektrolyseur mit mehreren, jeweils mehrere Elektrolysestacks aufweisenden Strings gemäß einem Ausführungsbeispiel,

FIG 4   ein I-U-Diagramm mit der Kennlinie einer Energiequelle und mehreren Kennlinien eines Elektrolyseurs bei veränderter Reihenschaltung von Elektrolysestacks und

FIG 5   ein I-U-Diagramm mit der Kennlinie einer Energiequelle und mehreren Kennlinien eines Elektrolyseurs bei veränderter Parallelschaltung von Strings.

"(schaltbarer) segmentierter Elektrolysestack eines Elektrolyseurs" (FIG 2)

FIG 2 zeigt einen von mehreren, jeweils gleich aufgebauten und zueinander parallel verschalteten, steuerbaren Elektrolysestack 6 eines - in diesem Fall - PEM-Elektrolyseurs 2 zur Wasserstoffelektrolyse (kurz im Folgenden nur Elektrolyseur 2).

Der Elektrolyseur 2 ist unmittelbar an eine regenerative Energiequelle 3, in diesem Fall eine Photovoltaikanlage bzw. ein Photovoltaikfeld (kurz PV-Anlage bzw. PV-Feld) 3, angeschlossen (nicht dargestellt), worüber er mit - die Wasserstoffelektrolyse im Elektrolyseur 2 bewirkende - Gleichspannung versorgt wird.

Die Elektrolysestacks 6 sind jeweils bzw. der in FIG 2 gezeigte eine Elektrolysestack 6 ist aus einer Vielzahl von elektrisch in Serie geschalteten Elektrolysezellen 10, hier insgesamt 250 Elektrolysezellen 10, aufgebaut.

Die Gesamtzahl aller Elektrolysezellen 10 des Elektrolyseurs 2 ist derart abgestimmt, dass die maximale Betriebsspannung der Elektrolyse größer oder gleich der maximalen PV-Spannung des PV-Feldes ist.

Die Elektrolysezelle 10 selbst besteht dabei wiederum aus einer Anode und einer Kathode, welche als Bipolarplatten 15 ausgebildet sind, sowie einer dazwischen angeordneten Polymer-Elektrolyt-Membran.

Wie weiter FIG 2 zeigt, weist der Elektrolysestack 6 einen segmentieren Bereich 16 sowie einen nicht segmentierten, statischen Bereich 17 mit dort gebündelten Elektrolysezellen 10 auf, wobei der segmentierte Bereich ca. 25% des Elektrolysestacks 6, d.h. 25% aller Elektrolysezellen 10 des Elektrolysestacks 6, umfasst.

In dem segmentierten Bereich 16 des Elektrolysestacks 6 sind insgesamt 5 Segmente 13 (Elektrolysezellengruppen/-bündel 13) ausgebildet, deren jedes eine unterschiedliche Anzahl von Elektrolysezellen 10 bündelt.

Die Anzahl der Elektrolysezellen 10 im jeweiligen Segment 13 bemisst sich nach einer mathematischen Reihe mit der folgenden (allgemeinen) Formel,

$$a * (2^x)$$

(mit a = natürliche Zahl, x = Anzahl der Segmente), wobei hier a = 1 und x = 5 (d.h. 5 Segmente 13) realisiert ist.

So erhält man die Segmentierung 13 mit den 5 Segmenten 13 bzw. Elektrolysezellengruppen/-bündel 13 zu 2, 4, 8, 16 und 32 Elektrolysezellen 10.

Die Segmentierung 13 bei den Elektrolysezellen 10 des segmentierten Bereichs 16 des Elektrolysestacks 6 - in die 5 Segmente mit den 2, 4, 8, 16 und 32 Elektrolysezellen - wird über Stromableitbleche 14 realisiert, die an entsprechender Stelle in den Elektrolysestack 6 eingeschoben sind.

Mittels Halbleiterschalter 11, hier als IGBT, deren Ein- und Ausschalten individuell steuerbar ist und die jeweils direkt auf die Stromableitbleche 14 montiert sind, sind die Segmente 13 kurzschließ-/überbrückbar.

Bei dem Elektrolysestack 6 mit den 250 Elektrolysezellen 10 und der Segmentierung 13 in die fünf Segmente 13 mit 2, 4, 6, 16 und 32 Elektrolysezellenbündel 13 ergibt sich so beispielsweise ein Regel-/Steuerbereich von ca. 300 V bis 550 V.

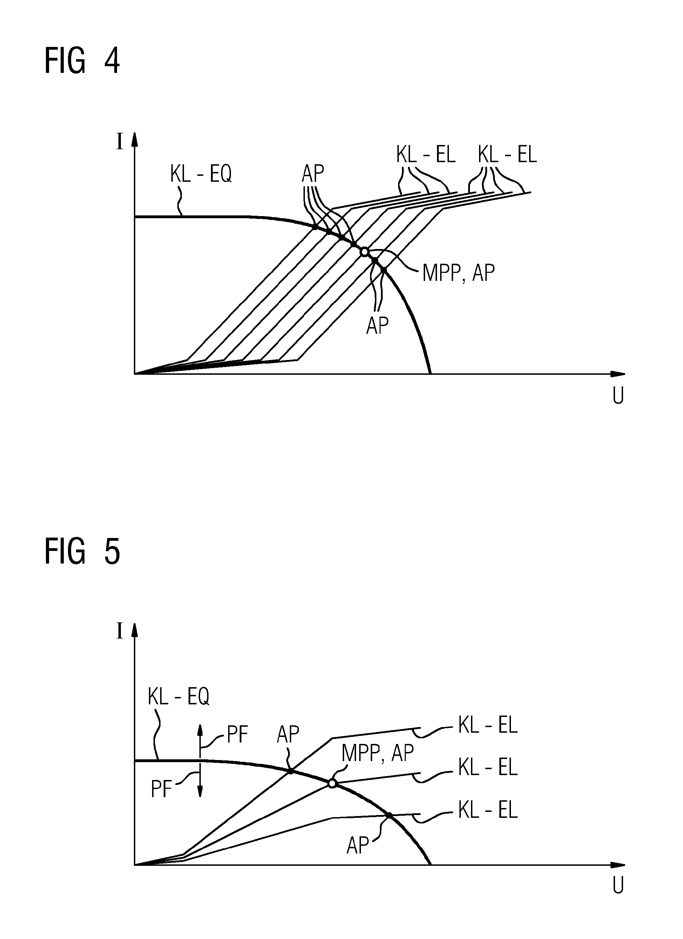

Durch entsprechendes, gesteuertes Ein-/Ausschalten bzw. Kurzschalten/Überbrücken einzelner bzw. mehrere Segmente 13 (in beliebiger Kombination) kann so die Anzahl der "aktiven" Elektrolysezellen 10 des Elektrolysestacks 6, damit die Spannung des entsprechenden Elektrolysestacks 6 (Elektrolysestackspannung) und so in Folge die auch die Spannung des Elektrolyseurs 2 gemäß den Kennlinien KL-EL in FIG 4 verändert werden (Veränderung/Verschiebung der Kennlinie KL-EL) - und so der PV-Spannung (schrittweise) angeglichen werden.

D.h., der Arbeitspunkt des Elektrolyseurs 2 kann hin zum Leistungsmaximum MPP (maximum power point) der den Elektrolyseur 2 betreibenden Energiequelle 3 verschoben werden.

Sind die Halbleiterschalter 11 jeweils direkt auf die Stromableitbleche 14 montiert, so dient das jeweilige Stromableitblech 14 gleichzeitig als Kühlkörper für den Halbleiterschalter 11. Der so entstehende Verbund ist somit besonders kompakt, eine separate Schalterkühlung ist hier nicht notwendig.

Die Steuerung der Schalter 11, d.h. deren - die Überbrückung bzw. den Kurzschluss der Segmente 13 bewirkendes - Ein- und Ausschalten, erfolgt durch eine Steuereinheit 8 (nicht dargestellt).

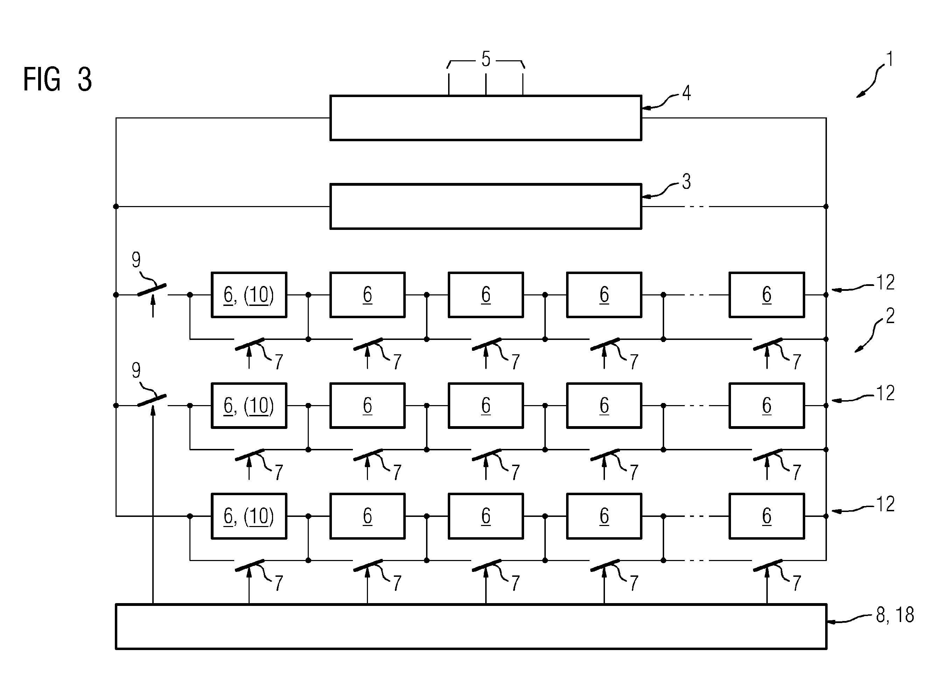

"Elektrolyseur mit schaltbaren Elektrolysestacks und schaltbaren Strings" (FIG 3)

In FIG 3 ist ein erfindungsgemäßes Ersatzschaltbild eines Energieversorgungssystems 1 mit einem steuerbaren Elektrolyseur 2 dargestellt, der direkt an eine erneuerbare Energiequelle 3, hier ein Photovoltaikfeld, und über einen Wechselrichter 4 an ein Stromnetz 5 angeschlossen ist.

Der Elektrolyseur 2 ist matrixartig aus einer Vielzahl von - in diesem Fall 15 in Reihe angeordnete Elektrolysezellen 10 aufweisende - Elektrolysestacks 6 aufgebaut, wobei mehrere (in Reihe geschaltete) Elektrolysestacks 6 einen String 12 bilden und mehrere Strings 12 parallel geschaltet sind.

Weiter ist eine Einrichtung, hier eine - verschiedene Schalter 7, 9 aufweisende - Schalteinrichtung, vorgesehen, mit der die Kennlinie des Elektrolyseurs 2 (KL-EL) durch Zu- und Abschaltung von Elektrolysestacks 6 und/oder Strings 12 veränderbar ist (vgl. FIGen 4 und 5).

Hierzu ist parallel zu den Elektrolysestacks 6 jeweils ein Schalter 7 angeschlossen, der über eine Steuereinheit 8 gemäß FIG 3 ein- oder ausschaltbar ist, wodurch ein Bypass, d.h. ein Kurzschluss bzw. eine Überbrückung für den Strom, parallel zum jeweiligen Elektrolysestack 6 möglich ist. Alternativ können auch mehrere hintereinander geschaltete Elektrolysestacks 6 durch einen Schalter 7 überbrückt werden.

Auf diese Weise kann die Anzahl der in Reihe geschalteten Elektrolysestacks 6 und damit die Spannung des betreffenden Strings 12 gemäß den Kennlinien KL-EL in FIG 4 verändert werden, wodurch der Arbeitspunkt hin zum Leistungsmaximum MPP (maximum power point) verschoben werden kann.

Um eine strommäßige Anpassung zu erreichen, lassen sich einzelne der parallel geschaltete Strings 12 durch Schalter 9 zu- und/oder abschalten, wodurch sich ein Kennlinienfeld mit den veränderbaren Kennlinien KL-EL für den Elektrolyseur 2 gemäß FIG 5 ergibt.

Somit kann die Kennlinie des Elektrolyseurs 2 (KL-EL) der aktuellen Kennlinie der erneuerbaren Energiequelle 3 (KL-EQ) im Betrieb angepasst werden, um einen Betrieb im Leistungsmaximum MPP (maximun power point) bzw. im Bereich des MPP zu ermöglichen.

Zum Beispiel führt eine Abschattung eines Photovoltaikfeldes zu einer Veränderung seiner Kennlinie (Verschiebung der Kennlinie KL-EQ angedeutet durch Pfeile PF in FIG 5), für die eine Anpassung des Arbeitspunktes des Elektrolyseurs 2 zum Betrieb im Leistungsmaximum MPP vorteilhaft ist.

Die Steuerung der Schalter 7, 9 der Schalteinrichtung (auch Schalter 11) durch die Steuereinheit 8 kann aufgrund von leistungsbezogenen Messdaten erfolgen.

Die elektrischen Schalter 7, 9 der Schalteinrichtung (auch Schalter 11) können auf Basis von Leistungshalbleitern bzw. durch Halbleiterschalter ausgeführt sein.

Weiterhin kann mit einer Erfassungseinheit 18 die Betriebsstundenzahl von zumindest einigen der zu- und/oder abschaltbaren Elektrolysestacks 6 erfasst werden.

Dies bietet den Vorteil, die Lebensdauer der Elektrolysestacks 6 gleichmäßig auszunutzen, indem nach Möglichkeit Elektrolysestacks 6 mit einer niedrigen Betriebsstundenzahl hinzugeschaltet bzw. solche mit einer hohen Betriebsstundenzahl abgeschaltet werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Elektrolysestack (6) mit mehreren Elektrolysezellen (10) **dadurch gekennzeichnet, dass** der Elektrolysestack (6) in mehrere jeweils eine bestimmte Anzahl von den Elektrolysezellen (10) umfassende, unter Verwendung von Schaltmittel (11) elektrisch kurzschließbare Segmente (13) elektrisch unterteilt ist.

2. Elektrolysestack (6) nach Anspruch 1, **dadurch gekennzeichnet, dass** die Segmentierung (13) durch Einbringung von Stromableitplatten (14) in den Elektrolysestack (6) und/oder durch Anbringung von Leitungsanschlüssen (14) an Elektrodenplatten (15), insbesondere an Bipolarplatten (15), des Elektrolysestacks (6) erfolgt.

3. Elektrolysestack (6) nach einem der vorhergehenden Ansprüche, **dadurch gekennzeichnet, dass** die Anzahl der Elektrolysezellen (10) der Segmente (13) jeweils unterschiedlich ist.

4. Elektrolysestack (6) nach Anspruch 3, **dadurch gekennzeichnet, dass** die Anzahl der Elektrolysezellen (10) eine mathematische Reihe bilden, insbesondere nach folgender Formel,

$$a \ * \ (2^x)$$

(mit a = natürliche Zahl, x = Anzahl der Segmente (10)) bestimmt sind.

5. Elektrolysestack (6) nach einem der vorhergehenden Ansprüche,
**dadurch gekennzeichnet, dass** der Elektrolysestack (6) einen segmentierten Bereich (16) mit der Segmentierung (13) sowie einen nicht segmentierten (statischen) Bereich (17) aufweist.

6. Elektrolysestack (6) nach Anspruch 5,
**dadurch gekennzeichnet, dass** der segmentierte Bereich (16) ca. 1/4 bis 1/3 des Elektrolysestacks (6), insbesondere ca. 1/4 oder ca. 1/3 des Elektrolysestacks (6), umfasst und/oder dass der nicht segmentierte Bereich (17) ca. 2/3 bis 3/4 des Elektrolysestacks (6), insbesondere ca. 2/3 oder ca. 3/4 des Elektrolysestacks (6), umfasst.

7. Elektrolysestack (6) nach einem der vorhergehenden Ansprüche,
**dadurch gekennzeichnet, dass** die Schaltmittel (11) einen Schalter (11) auf Basis eines Leistungshalbleiters, insbesondere einen Halbleiterschalter (11), aufweisen.

8. Elektrolysestack (6) nach Anspruch 7,
**dadurch gekennzeichnet, dass** der Schalter (11) in einem thermischen Kontakt zu dem die Segmentierung (13) bewirkenden Segmentierungsmittel (14), insbesondere zu einer in den Elektrolysestack (6) eingebrachten Stromableitplatte (14) oder zu einer Elektrodenplatte (15) der Elektrolysezelle (10) oder zu einem an der Elektrodenplatte (15) angebrachten Leitungsanschluss (14), steht.

9. Elektrolysestack (6) nach einem der vorhergehenden Ansprüche,
**dadurch gekennzeichnet, dass** der Elektrolysestack (6) ca. 100 bis 400, insbesondere ca. 200 bis 300, Elektrolysezellen (10) aufweist, wobei insbesondere die Elektrolysezellen (10) der Segmente (13) jeweils mit Spannung zwischen 20 V bis 50 V betreibbar sind.

10. Elektrolyseur (2) mit mindestens einem Elektrolysestack (6) nach einem der vorhergehenden Ansprüche oder mit mehreren, parallel und/oder in Reihe geschalteten Elektrolysestacks (6) jeweils nach einem der vorhergehenden Ansprüche.

11. Elektrolyseur (2) mit mehreren, zu mindestens einem String (12) in Reihe geschalteten Elektrolysestacks (6), gekennzeichnet mit Schaltmittel (7), unter Verwendung derer ein oder mehrere von den zu dem mindestens einen String (12) in Reihe geschalteten Elektrolysestacks (6) elektrisch kurzschließbar sind.

12. Elektrolyseur (2) mit mehreren, jeweils mehrere in Reihe geschaltete Elektrolysestacks (6) aufweisenden, parallel geschalteten Strings (12) gekennzeichnet mit Schaltmittel (9), unter Verwendung derer ein oder mehrere von den parallel geschalteten Strings (12) elektrisch zu-/abschaltbar sind.

13. Elektrolyseur (2) nach Anspruch 11 oder 12,
**dadurch gekennzeichnet, dass** mindestens einer von den Elektrolysestacks (6) nach mindestens einem der Ansprüche 1 bis 9 ausgeführt ist, oder nach Anspruch 11 oder 12.

14. Elektrolyseur (2) nach einem der Ansprüche 11, 12 oder 13,
gekennzeichnet mit einer Erfassungseinheit (18) zur Erfassung einer Betriebsstundenzahl von zumindest einigen der Elektrolysestacks (6) und/oder mit einer Steuereinheit (8) zur Steuerung der Schaltmittel (7, 9, 11), wobei die Steuereinheit insbesondere derart eingerichtet ist, dass die Steuerung durch die Steuereinheit (8) aufgrund von leistungsbezogenen Messdaten und/oder abhängig von der erfassten Betriebsstundenzahl erfolgt.

15. Energieversorgungssystem (1) mit einer erneuerbaren Energiequelle (3) und einem daran angeschlossenen Elektrolyseur (2) nach mindestens einem der Ansprüche 10 bis 14, wobei insbesondere die erneuerbare Energiequelle (3) eine Photovoltaikanlage oder eine Windenergieanlage ist.

FIG 1

FIG 2

EP 2 781 624 A1

FIG 3

EP 2 781 624 A1

FIG 4

FIG 5

Europäisches
Patentamt
European
Patent Office
Office européen
des brevets

**EUROPÄISCHER RECHERCHENBERICHT**

**Nummer der Anmeldung**

EP 13 18 1180

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/200899 A1 (MATA MARIANNE [US] ET AL) 18. August 2011 (2011-08-18) <br> * Ansprüche 1-10,13,14,18 * <br> * Abbildungen 4,5 * <br> * Absätze [0001], [0021], [0023], [0030], [0032] - [0041], [0050], [0052] * <br><br> ----- | 1-15 | INV. <br> C25B15/00 <br> C25B9/04 <br> C25B9/18 <br><br> ADD. <br> C25B1/04 |
| Y | US 2006/246331 A1 (STEINBRONER MATTHEW P [US]) 2. November 2006 (2006-11-02) <br> * Ansprüche 1,14,17,25 * <br> * Abbildungen 5-8,14-17 * <br> * Absatz [0005] * <br><br> ----- | 1-15 | |
| Y | US 4 310 605 A (EARLY JACK ET AL) 12. Januar 1982 (1982-01-12) <br> * Ansprüche 1,5 * <br> * Abbildungen 6-9 * <br> * Spalte 6, Zeilen 14-45 * <br> * Spalte 8, Zeile 37 - Spalte 9, Zeile 14 * <br><br> ----- | 1-15 | RECHERCHIERTE SACHGEBIETE (IPC) <br><br> C25B <br> H01M |

Der vorliegende Recherchenbericht wurde für alle Patentansprüche erstellt

| Recherchenort | Abschlußdatum der Recherche | Prüfer |
|---|---|---|
| München | 7. Mai 2014 | Perednis, Dainius |

EPO FORM 1503 03.82 (P04C03)

# EP 2 781 624 A1

**ANHANG ZUM EUROPÄISCHEN RECHERCHENBERICHT
ÜBER DIE EUROPÄISCHE PATENTANMELDUNG NR.**

EP 13 18 1180

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2014

| Im Recherchenbericht angeführtes Patentdokument | Datum der Veröffentlichung | Mitglied(er) der Patentfamilie | Datum der Veröffentlichung |
|---|---|---|---|
| US 2011200899 A1 | 18-08-2011 | CA 2789405 A1<br>CN 102763259 A<br>EP 2537201 A1<br>JP 2013519992 A<br>US 2011200899 A1<br>WO 2011102919 A1 | 25-08-2011<br>31-10-2012<br>26-12-2012<br>30-05-2013<br>18-08-2011<br>25-08-2011 |
| US 2006246331 A1 | 02-11-2006 | US 2006246331 A1<br>WO 2006118754 A2 | 02-11-2006<br>09-11-2006 |
| US 4310605 A | 12-01-1982 | AU 7424481 A<br>CA 1164524 A1<br>DE 3137677 A1<br>FR 2490882 A1<br>GB 2084387 A<br>IT 1171540 B<br>JP S5780677 A<br>JP S6130386 B2<br>US 4310605 A | 01-04-1982<br>27-03-1984<br>19-05-1982<br>26-03-1982<br>07-04-1982<br>10-06-1987<br>20-05-1982<br>12-07-1986<br>12-01-1982 |

EPO FORM P0461